# EUROPEAN PATENT SPECIFICATION

(11) **EP 3 936 313 B1**
(45) Date of publication and mention of the grant of the patent: **19.03.2025**
(21) Application number: 21184623.3
(22) Date of filing: 08.07.2021
(51) Int. Cl.: B29C 65/18, B29C 65/30, B29C 65/74, B65B 51/14, B29K 23/00, B65B 9/02, B65B 11/50

(54) **A METHOD AND AN APPARATUS FOR FORMING A SEAL AND POLYETHYLEN FOOD PACKAGE**
VERFAHREN UND VORRICHTUNG ZUR HERSTELLUNG EINER SIEGELVERBINDUNG UND LEBENSMITTELVERPACKUNGEN AUS POLYETHYLEN
PROCÉDÉ ET APPAREIL POUR FORMER UN JOINT SCELLÉ ET EMBALLAGE ALIMENTAIRE EN POLYÉTHYLÈNE

(30) Priority: 09.07.2020 GB 202010534
(43) Date of publication of application: 12.01.2022
(73) Proprietor: Nomad Foods Europe Limited, Feltham, Middlesex TW14 8HA (GB)
(72) Inventor: COOPER, Paul, Feltham, TW14 8HA (GB); BRACKENBURY, Lisa, Feltham, TW14 8HA (GB); WILKINSON, Chris, Feltham, TW14 8HA (GB); MORFITT, Mark, Feltham, TW14 8HA (GB); BOND, Duncan, Feltham, TW14 8HA (GB)
(74) Representative: Haseltine Lake Kempner LLP

(56) References cited:
- EP-A1- 0 572 270
- JP-A- H0 824 314
- US-A- 2 982 066

## Description

### Technical Field

The present disclosure relates to a method and an apparatus for forming a seal, and is particularly, although not exclusively, concerned with a method and an apparatus for forming a seal for a food package.

### Background

Across many industries, including the food industry, there is a widely held desire to replace non-recyclable packaging with recyclable packaging. However, the properties of recyclable packaging materials may differ from those of non-recyclable packaging materials, such that it may not be possible to use existing methods for non-recyclable materials to package goods using recyclable materials.

Furthermore, existing methods of producing non-recyclable packaging may be capable of producing packaging for food (e.g. food bags) at a rate of approximately 60 to 80 packages per minute. However, previously proposed methods of producing recyclable packaging have been unable to match these rates.

Improvements are therefore required in the art of recyclable packaging.

US 2 982 066 discloses a packaging apparatus. EP 0 572 270 discloses a heat seal device. JP H08 24314 discloses a transfusion bag.

### Statements of Invention

According to an aspect of the present disclosure, there is provided a method of forming a seal for a food package according to claim 1.

The first sealing surface may comprise an array of recesses. The second sealing surface may comprise projections and recesses. Accordingly, the first and second sealing surfaces may each comprise an array of recesses and an array of discrete projections. The recesses of each of the first and second sealing surfaces may be configured to cooperate with the projections provided on the opposing sealing surface.

Alternatively, the second sealing surface may comprise only recesses, which the projections of the first sealing surface cooperate with.

The recesses may be formed between adjacent projections of the array of discrete projections.

Each of the projections may comprise a tapered geometry, e.g. such that a width of each projection may decrease with height. Each of the projections may comprise a pyramidal geometry, e.g. with a square base. Each of the projections may comprise a complete pyramid (e.g. a non-frustopyramidal geometry). Alternatively, each of the projections may comprise an incomplete pyramidal (e.g. a frustopyramidal) geometry. Each of the projections may comprise a peak (e.g. a point) or a tip.

Applying heat to the first layer and the second layer may comprise applying heat to a portion of the first layer and a portion of the second layer clamped between the first and second sealing surfaces.

Applying heat to the first layer and the second layer may comprise heating the first and second sealing surfaces to a temperature of 135 degrees C.

At least one of the first and second layers may comprise a first sublayer and a second sublayer. The first sublayer may comprise biaxially oriented polyethylene (BOPE). The second sublayer may comprise low density polyethylene (LDPE), such as linear low density polyethylene (LLDPE). The first and second layers may be recyclable and/or formed from recycled material. The first and second layers may each comprise a first sublayer and a second sublayer. One or more (e.g. both) of the first and second layers may consist essentially of (e.g. may consist of) the first sublayer and the second sublayer. The first and second layers may be substantially identical (e.g. identical).

The first and second layers may be provided between the sealing surfaces such that the first sublayer of the first layer may face the second layer (e.g. the first sublayer of the second layer or the second sublayer of the second layer). Alternatively, the first and second layers may be provided between the sealing surfaces such that the second sublayer of the first layer may face the second layer (e.g. the first sublayer of the second layer or the second sublayer of the second layer).

The first layer may be provided between the sealing surfaces such that the first sublayer of the first layer may face the nearest or corresponding sealing surface. Alternatively, the first layer may be provided between the sealing surfaces such that the second sublayer of the first layer may face the nearest or corresponding sealing surface.

The second layer may be provided between the sealing surfaces such that the first sublayer of the second layer may face the nearest or corresponding sealing surface. Alternatively, the second layer may be provided between the sealing surfaces such that the second sublayer of the second layer may face the nearest corresponding sealing surface. The way in which the first and second layers are provided between the sealing surfaces may determine, upon clamping and application of heat, which of the sublayers of the first layer is bonded to which of the sublayers of the second layer. For example, the first sublayer of one of the first and second layers may be bonded (e.g. sealed) to the first sublayer of the other of the first and second layers. Alternatively, the first sublayer of one of the first and second layers may be bonded (e.g. sealed) to the second sublayer of the other of the first and second layers. Alternatively, the second sublayer of one of the first and second layers may be bonded (e.g. sealed) to the second sublayer of the other of the first and second layers.

Only the first and second layers may be provided between the sealing jaws. For example, no non-stick material (e.g. Teflon) may be provided on the surface of one or more of the sealing jaws so as to prevent adhesion or gumming up.

A thickness of the first (e.g. BOPE) sublayer may be approximately 25 microns. A thickness of the second (e.g. LLDPE) sublayer may be between approximately 70 and 80 microns. A total thickness of each laminated layer 110, 112 may be between 95 and 105 microns (e.g. 100 microns).

The projections of the first sealing surface may cooperate with the recesses of the second sealing surface such that voids or channels remain between the first and second sealing surfaces when they have come together. The tips (e.g. only the tips) of the projections of the first sealing surfaces may contact the array of recesses on the second sealing surfaces. The sides or faces or edges of the projections of the first sealing surface may not contact the second sealing surface. The first and second sealing surfaces may thereby mate incompletely.

The tips of the projections (e.g. the tip of each projection) may be rounded. For example, each projection may comprise a square-based pyramidal geometry having a rounded tip. A rounded tip may allow each projection to bias the layers towards the opposing sealing surface, without penetrating the layers (e.g. without yet penetrating the layers, until the second position is reached). The rounded tip may not contact a recess provided in an opposing sealing jaw.

The projections may comprise a stepped portion or stepped surface. The stepped portion may be provided on at least one face (e.g. lateral surface) of each projection. The stepped portion may be provided on opposite faces (e.g. two opposing faces) of a square-based pyramidal projection. The stepped portion may be provided on all four faces of a square-based pyramidal projection. The stepped portions provided on the same projection may intersect one another (e.g. along the slant edges) such that a continuous, four-sided step may be formed. Each projection may comprise a step pyramid (e.g. a pyramid comprising a step).

The stepped portion may comprise a discontinuity in gradient when compared with the remainder of the face. The stepped portion may comprise a gradient which is lower in magnitude than the remainder of the face. The stepped portion may constitute an enhanced (e.g. further) tapering of the projection. The stepped portion may be provided between upper and lower portions having gradients of greater magnitude.

The stepped portion may be configured to cooperate with a corresponding stepped portion provided on an opposing projection. The opposing stepped portions may cooperate to clamp the first and second layers therebetween. For example, only the stepped portions may clamp (e.g. grip engage or contact) the first and second layers therebetween.

The stepped portions of opposing sealing surfaces may constitute the closest points or surfaces of the sealing surfaces when in the second position. For example, only the stepped portions of one sealing surface may contact the opposing sealing surface (e.g. the stepped portions thereof).

Each face of a projection may comprise a plurality of stepped portions.

The array of discrete projections may comprise a plurality of discrete projections arranged in a repeating pattern having two-dimensional periodicity. The two-dimensional periodicity may be exhibited along axes that are perpendicular to one another. The two-dimensional periodicity may be exhibited along axes that are not perpendicular to one another. For example, neighbouring columns or rows of projections may be offset from one another. The two-dimensional periodicity may be exhibited along axes that are at 45 degrees to one another. The axes of the array of discrete projections and/or the array of recesses may be offset from the edges of the respective sealing jaw (e.g. by 45 degrees). The axes of the array of discrete projections and/or the array of recesses may thereby not be parallel with the edges of the sealing surfaces.

The method may comprise clamping the first layer and the second layer together for a duration between 350 and 500 milliseconds.

The method may comprise forming seals for a food package at a rate in excess of 35 seals per minute. For example, the method may comprise forming seals for a food package at a rate between 55 and 60 seals per minute, and/or up to 110 seals per minute.

The method may comprise providing at least a portion of a re-sealable strip between the first and second layers and between the first and second sealing surfaces.

The method may be a method of forming a seal for a frozen food package (e.g. a permanent seal for a frozen food package).

The first layer and/or the second layer may comprise a first sublayer and a second sublayer. The first sublayer may comprise BOPE. The second sublayer may comprise LDPE, such as LLDPE.

Applying heat to the first layer and the second layer may comprise heating the first and second sealing surfaces to a temperature of 135 degrees C. The first and second sealing surfaces may be heated prior to clamping the first layer and the second layer therebetween. According to another aspect of the present disclosure there is provided a food package sealing assembly according to claim 14.

The at least one heater may heat the first and second sealing surfaces to a temperature of 135 degrees C.

Other features mentioned in respect of the previous aspect may apply equally to the present aspect.

The food package may comprise a re-sealable strip between the first and second layers. At least a portion of the re-sealable strip may be present where the seal is formed.

The seal may comprise an array of discrete apertures corresponding to the array of discrete projections. For example, upon clamping the first and second sealing surfaces, a tip of each of the discrete projections may penetrate or punch-out an area of the first and second layers against a corresponding recess provided in the opposing sealing surface. The central axis of each of the apertures may be perpendicular to the plane of the first and second layers. The penetrated material may remain attached to the seal, such that no material may be ejected. The seal may be a permanent seal.

The present inventors have determined that methods and apparatuses presently used to form seals in non-recyclable food packaging may not be suitable for forming seals in recyclable packaging. For example, seals in non-recyclable packaging may be formed by heat sealing, in which two pieces of plastic are pressed together between heated jaws in order to locally melt the plastic therebetween, thereby forming a seal between the two pieces of plastic. However, recyclable packaging materials often have a lower melting point than their non-recyclable counterparts, meaning that using non-recyclable (e.g. higher) jaw temperatures when sealing recyclable packaging often causes defective seals and machine malfunctions or gumming up, due to rapid and uncontrolled melting of the recyclable material. However, when using lower jaw temperatures, lower rates of heat dissipation are achieved by the heat sealing jaws, meaning that the materials must be pressed together between the jaws for longer, thus reducing the throughput of the sealing apparatus, and increasing the cost of the packaging process.

For example, the present inventors have determined that at 135 degrees C, using previously proposed methods and apparatuses, the jaw temperature and/or rate of heat dissipation is too high, and causes complete melting of the plastic, a faulty seal and gummed-up apparatus.

Further, the higher temperatures associated with sealing non-recyclable materials have certain advantages in the food packaging process, including burning off any food debris (e.g. food dust) which may be trapped between the layers of plastic at the location of the seal. The use of lower temperatures for recyclable materials may not burn off this food debris as readily, which may cause defective seals, and subsequent food wastage.

Further still, previously proposed methods and apparatuses for producing recyclable food packaging may produce seals having a high failure rate, for example, seals which may suffer from a lack of durability and/or a lack of structural integrity and/or an imperfect seal. Such imperfections are undesirable as they either slow down production or result in an inferior product being distributed to customers.

The present invention improves the heat transfer between the sealing surfaces the adjacent layers of recyclable material such that a consistently good and reliable seal can be obtained at lower temperatures and with a short hold time. The present invention thus allows existing throughput rates of approximately 60 to 80 packages (e.g. bags) per minute to be matched (and/or exceeded) and with minimal production line downtime.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of Drawings

For a better understanding of the present invention, and to show more clearly how it may be carried into effect, reference will now be made, by way of example, to the accompanying drawings, in which:
Figure 1 is a perspective view of a set of sealing jaws according to the present disclosure;
Figure 2 is an end view of the sealing jaws of Figure 1 along the direction II shown in Figure 1;
Figure 3 is an example sectional side view through the first and second sealing surfaces;
Figures 4A and 4B (collectively Figure 4) show plan views of example configurations of the surface features provided on the sealing surfaces;
Figure 5 shows an example method according to the present disclosure;
Figure 6A shows a section along a midline of a stepped projection according to one aspect of the present disclosure;
Figure 6B shows a section along a midline of two opposing stepped projections when the sealing jaws are in a second position, the stepped projections according to the aspect of Figure 6A;
Figure 6C shows a section along a midline of a stepped projection according to one aspect of the present disclosure;
Figure 6D shows a section along a midline of two opposing stepped projections when the sealing jaws are in the second position, the stepped projections according to the aspect of Figure 6C;
Figure 7 shows an example of a food packaging article formed by the method and/or jaws of the present disclosure; and
Figure 8 is a quality matrix of showing the quality of a seal formed by the method and/or jaws of the present disclosure for a range of temperatures and hold times.

### Detailed Description

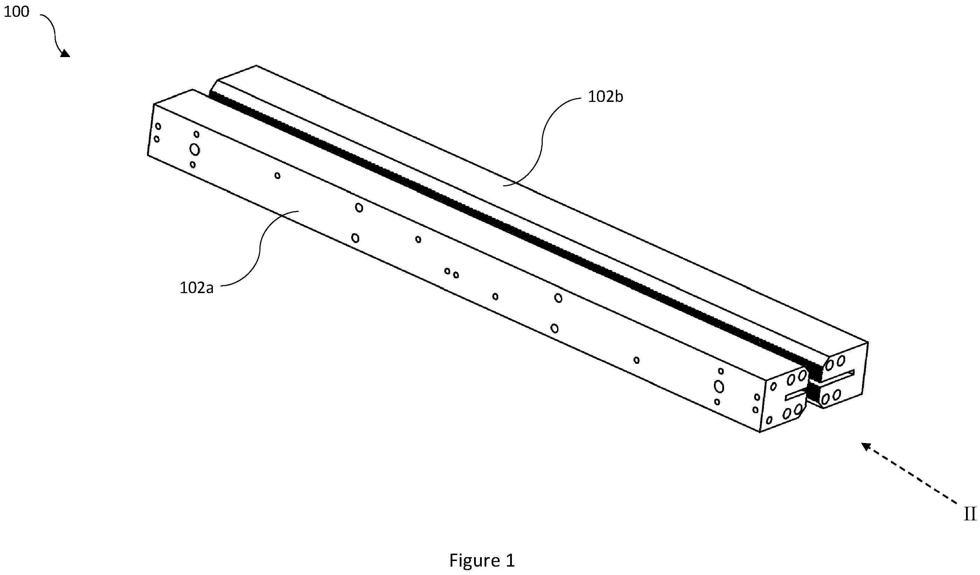

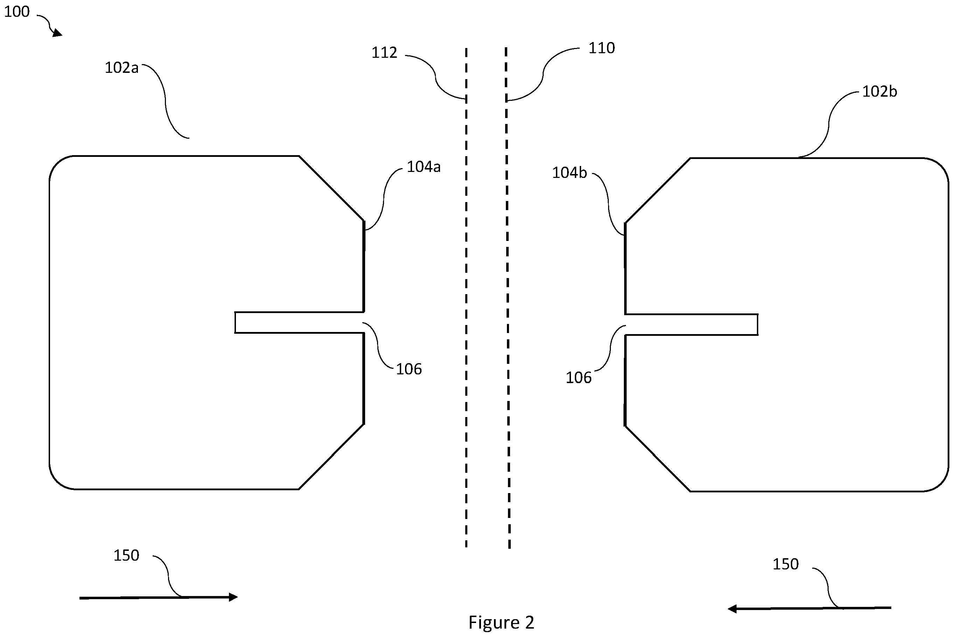

Figure 1 shows a perspective view of a set of jaws 100. Figure 2 shows an end view the set of jaws 100 along the direction II shown in Figure 1, in parallel with the longitudinal direction of the set of jaws 100.

With reference to Figures 1 and 2, a set (e.g. a pair) of sealing jaws 100 comprises a first jaw 102a and a second jaw 102b. The first jaw 102a and the second jaw 102b may be configured to cooperate in order to form a seal between layers 110, 112 of material provided therebetween. The first jaw 102a and the second jaw 102b may be elongate (e.g. extend longitudinally) with a substantially uniform (e.g. a uniform) transverse cross section. Accordingly, the end view shown in Figure 2 may be substantially the same as any transverse cross section through the set of jaws 100. The first jaw 102a and the second jaw 102b may be substantially identical (e.g. in cross section and dimensions).

The first jaw 102a comprises a first sealing surface 104a, and the second jaw 102b comprises a second sealing surface 104b. As will be described below, the first sealing surface 104a and the second sealing surface 104b may be configured to cooperate (e.g. engage, interlock and/or mate with one another) in order to form a seal between layers of material 110, 112 provided therebetween.

Each of the first and second jaws 102a, 102b may comprise a heater (not shown) configured to heat (e.g. continuously heat) the sealing surfaces 104a, 104b in order to achieve a desired temperature of the sealing surfaces 104a, 104b. The heater may be in the form of an electrical heater or any other type of heater. In another arrangement, only one of the jaws 102a, 102b may be heated.

Each of the first sealing surface 104a and the second sealing surface 104b may be bisected by a longitudinal slot 106 which may be configured to house a knife or cutter (not shown). The longitudinal slot 106 may provide a longitudinal separation between upper and lower portions of the sealed material. The knife or cutter may be configured to cut the layers of sealed material longitudinally in order to separate the upper portion from the lower portion.

Upon assembly of the set of jaws 100, the first and second jaws 102a, 102b may be configured to face or oppose one another. In particular, the first sealing surface 104a may be configured to oppose the second sealing surface 104b, such that the sealing surfaces 104a, 104b may be substantially aligned. The first sealing surface 104a and the second sealing surface 104b may be laterally and/or longitudinally aligned. For example, the first and second sealing surfaces 104a, 104b may be substantially parallel and aligned upon assembly.

Accordingly, and as shown in Figures 1 and 2, upon assembly of the set of jaws 100, the first sealing surface 104a of the first jaw 102a may form the closest point (e.g. surface) of the first jaw 102a to the second jaw 102b. Likewise, upon assembly of the set of jaws 100, the second sealing surface 104b of the second jaw 102b may be the closest point (e.g. surface) of the second jaw 102b to the first jaw 102a.

At least one (e.g. both) of the first jaw 102a and the second jaw 102b may be connected to an actuator for actuating the respective jaw 102a, 102b, such that the first jaw 102a and the second jaw 102b may be movable relative to one another. The set of jaws 100 may be actuatable between a first or open position shown in Figures 1 and 2, and a second or closed position (not shown). In the first position, the sealing surfaces 104a, 104b may be separated by a distance which is sufficient to receive a number (e.g. a plurality and/or at least two) of layers 110, 112 (e.g. sheets or films) of material between which a seal is to be formed. In the second position, the first and second sealing surfaces 104a, 104b may cooperate (e.g. engage, interlock and/or mate) with one another so as to form a seal between the layers of material 110, 112 provided therebetween. For example, in the second position, the separation between the first sealing surface 104a and the second sealing surface 104b may be zero (e.g. substantially zero or close to zero), such that the first and second sealing surfaces 104a, 104b may be touching (e.g. touching in certain locations).

The set of jaws 100 may be linearly actuatable between the first and second positions. For example, a separation between the first and second sealing surfaces 104a, 140b may be uniform along the whole length of the set of jaws 100, when in the first position, when in the second position, or whilst being actuated therebetween.

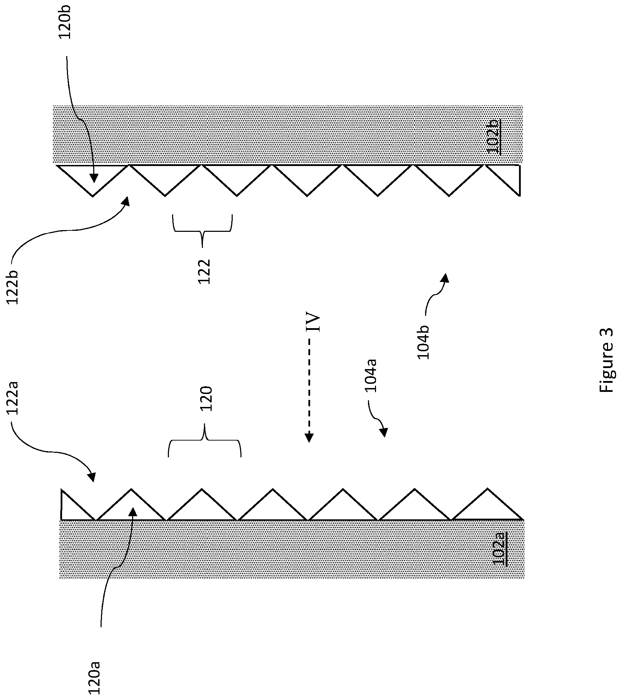

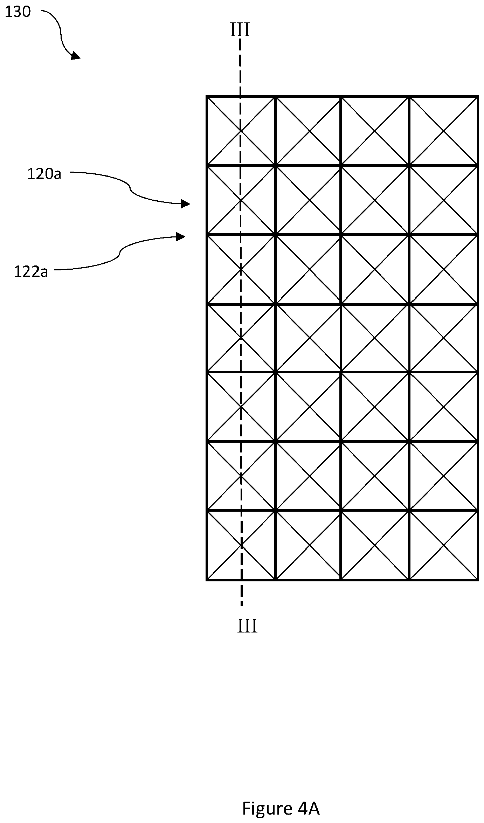

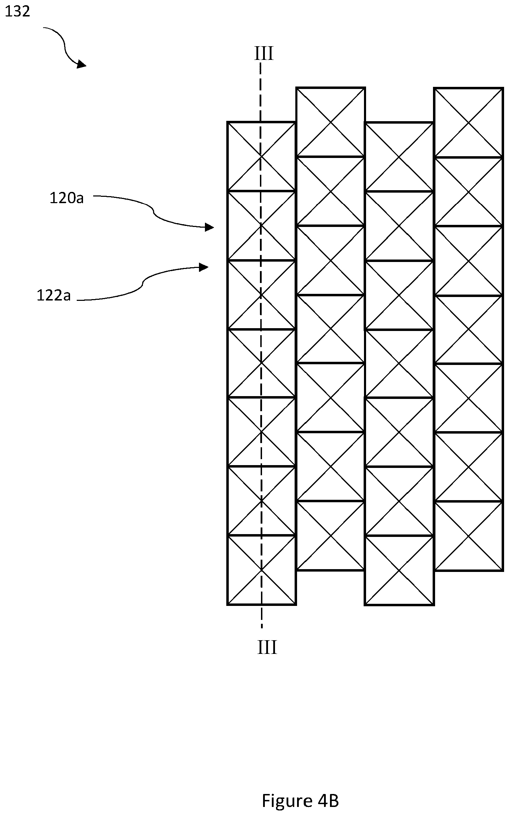

Figure 3 shows a sectional side view through the first and second sealing surfaces 104a, 104b provided on the first and second jaws 102a, 102b respectively. The sectional side view shown in Figure 3 may be taken through a plane which comprises the line III - III shown in Figure 4.

With reference to Figure 3, the first and second sealing surfaces 104a, 104b may each comprise a plurality of discrete surface features 120, 122. The surface features 120, 122 may comprise projections 120 (e.g. 120a, 120b) and/or recesses 122 (e.g. 122a, 122b). The projections 120 may be discrete in that peaks of the projections may be separate and/or distinct from one another (e.g. not continuous). By contrast, the recesses 122 may be connected to one another, e.g. such that troughs of the recesses 122 may not be distinct. Alternatively, the recesses 122 may be distinct from one another.

The first sealing surface 104a may comprise a plurality of projections 120a. The second sealing surface 104b may comprise a plurality of recesses 122b configured to align with the projections 120a of the first sealing surface 104a such that the projections 120a may be received (e.g. at least partially received) in the recesses 122b. The first sealing surface 104a may be knurled.

The second sealing surface 104b may comprise a plurality of projections 120b. The second sealing surface 104b may thus also be knurled. (The recesses 122b may be formed between neighbouring projections 120b and the recesses 122a may be formed between neighbouring projections 120a.) The first sealing surface 104a may comprise a plurality of recesses 122a configured to align with the projections 122a of the second sealing surface 104b such that the projections 120b may be received (e.g. at least partially received) in the recesses 122a.

For example, and as shown in Figure 3, each of the first sealing surface 104a and the second sealing surface 104b may comprise both projections 120 and recesses 122. The first and second sealing surfaces 104a, 104b may thereby each comprise a corresponding plurality of discrete projections 120 and recesses 122, the sealing surfaces 104a, 104b thereby being configured to cooperate (e.g. engage, interlock and/or mate) with one another in order to form a seal in the layers 110, 112 of material provided therebetween.

In an example not shown, the second sealing surface 104b may comprise recesses 122b but may not comprise projections 120b, such that the recesses 122b of the second sealing surface 104b may be inset within the second jaw 102. The first sealing surface 104a may thereby constitute a male mating surface, and the second sealing surface 104b may thereby constitute a female mating surface.

Each recess 122 may be configured to receive (e.g. at least partially receive) a corresponding projection 120 provided on the opposing sealing surface 104a, 104b. One or more of the first and second sealing surfaces 104a, 104b may comprise a plurality of discrete projections 120a, 120b, which may extend or project from (e.g. perpendicularly from) the respective jaw 102a, 102b. The projections 120 may be tapered in cross section, such that their width may decrease with distance from the respective sealing surface 104a, 104b. For example, the first and second sealing surfaces 104a, 104b may comprise a plurality of pyramid-shaped (e.g. square-based, quadrilateral-based, triangle-based, circle-based or any other base shape) projections 120a, 120b. Additionally or alternatively, the discrete surface features may comprise cones, frustums, or any other suitable projection of tapered cross section.

The tapering of the projections 120 with height may provide (e.g. define) recesses 122 between adjacent projections 120. For example, adjacent square-based pyramidal projections 120 shown from the side in Figure 3 may define recesses 122 therebetween having inverted triangular cross sections. The recesses 122 may thereby be provided interstitially between the plurality of projections 120.

Figures 4A and 4B (collectively Figure 4) show plan views of two example configurations of the plurality of projections 120 and recesses 122 provided on the first sealing surface 104a shown in the direction IV shown in Figure 3. It will be evident that a corresponding and/or cooperating configuration may be provided on the second sealing surface 104b. Each square shown in Figure 4 may represent a square-based pyramidal projection 120 of the sealing surface 104a, wherein the sides of the square define the square base, the diagonal lines within each square represent the edges of the pyramidal projection 120. Accordingly, at the intersection of the diagonal lines (i.e. at the centre of each square), a peak (e.g. most distal portion) of the projection 120 may be found. Along each side of the square base of the pyramidal projection 120, a trough of a recess 122 (e.g. most recessed portion) may be found. Accordingly, the troughs of the recesses 122 may form a network provided interstitially between the plurality of projections 120.

The plurality of projections 120 and recesses 122 may be arranged in a two-dimensional array 130, 132 on each sealing surface 104a, 104b, such that the surface features 120, 122 may exhibit a two-dimensional periodicity (e.g. a periodicity along two axes and/or directions). For example, as shown in Figure 4A, the two dimensional periodicity may be exhibited along two axes which are perpendicular to one another. A regular, grid-like configuration (e.g. having rows and columns) may thereby be formed, such that adjacent projections 120 may be aligned along each of the axial directions (e.g. in columns parallel with line III-III, and rows perpendicular to line III-III), and adjacent recesses 122 may be aligned along each of the axial directions (e.g. in columns parallel with line III-III, and rows perpendicular to line III-III). Similarly, the separation between adjacent projections 120 and adjacent recesses 122 may be equal along either of the two axial directions.

Alternatively, as shown in Figure 4B, the two-dimensional periodicity may be exhibited along two axes which are not perpendicular (e.g. at 45 degrees) to one another, such that an alternative (e.g. diagonal) grid configuration or lattice may be achieved. In this example, adjacent projections 120 and adjacent recesses 122 may still be aligned in columns (e.g. parallel with line III-III), but no longer aligned in rows. Projections 120 in a first column may align with recesses 122 in an adjacent column, and vice versa. Accordingly, the separation between adjacent projections 120 and adjacent recesses 122 may vary with direction.

For example, along the line III-III (e.g. as shown in Figure 3), each column will exhibit a regular periodicity of projection-recess-projection-recess etc. However, along a line perpendicular to the line III-III, the separation between adjacent projections 120 may be twice that along the line III-III.

The array 130, 132 of discrete surface features 120, 122 may extend over (e.g. substantially cover) each sealing surface 104a, 104b. For example, only the sealing surface 104a of the first jaw 102a may contact the sealing surface 104b of the second jaw 102b.

As shown in Figures 3 and 4, the recesses 122 may be provided interstitially between the projections 120, such that the array 130, 132 of discrete projections 120 may overlap with, but be offset from, the array of recesses 122. For example, the array of recesses 122 and the array of discrete projections 120 may comprise the same periodicity and the same axes, but may be offset, along the direction of the axes, by a magnitude equal to half of the periodicity of the two arrays in the two axial directions.

A height (e.g. a perpendicular height) of each projection 120 extending beyond the respective jaw 102a, 102b may be equal (e.g. substantially equal) to the depth of the corresponding recess 122 on the opposing sealing surface 104a, 104b. Further, the sealing surfaces may be aligned such that the peak of a projection 120 may be aligned with a recess 122 provided on the opposing sealing surface 104a, 104b. For example, the peak (e.g. most distal portion) of a projection 120a provided on the first jaw 102a may, when the set of jaws 100 is in the second position, contact the trough (e.g. most recessed portion) of the corresponding recess 122 provided on the opposing second jaw 102b. In this manner, the layers of material provided between the set of jaws 100 may be crimped (or even perforated) at the centre of each corresponding pair of projections 120 and recesses 122 provided on opposing jaws.

The projections 120 and recesses 122 may be configured such that, when the first and second jaws 102a, 102b are in the second position, the peaks of the projections 120 and the troughs of the recesses 122 may contact one another. Additional or alternative portions of each projection 120 and recess 122 provided on opposing sealing surfaces 104a, 104b may contact one another when in the second position. For example, an edge and/or a surface (e.g. a face) of each projection 120 may contact an edge and/or a surface of a recess 122 provided on an opposing sealing surface 104a, 104b. The projections 122 and recesses 120 may be configured to contact one another only in certain or limited locations. For example, only the peaks of the projections 120 and the troughs 122 of the recesses 122 may contact one another. The tapered sides of the projections 120 and the tapered sides of the recesses 122 may not contact one another, or may only contact one another in certain locations (e.g. on only one aspect of each projection 120 and recess 122). For example, only one edge and/or surface of each projection 120 may contact an edge and/or surface (e.g. face) of an opposing recess 122.

When in the second position, a series of voids or channels between adjacent projections 120a, 120b of the first and second sealing surfaces 104a, 104b may be formed. The layers 110, 112 of the material being sealed may at least partially occupy these voids or channels. For example, the material being sealed may melt and flow into these voids or channels to thereby form a seal (e.g. a continuous seal).

In a preferred example, both the first and second sealing surfaces 104a, 104b comprise overlapping but offset arrays 132 of discrete projections 120 and recesses 122. According to the preferred example, each projection 120 comprises a square-based pyramidal geometry, the height of the projections 120 being approximately 0.9 mm, with the depth of the opposing recesses 122 also being approximately 0.9 mm. In the preferred example, the arrays comprise axes at 45 degrees to one another, the projections 120 and recesses 122 comprising a periodicity (e.g. separation along the directions of the axes) of approximately 2 mm, such that each projection is approximately 2 mm wide. Further, the sealing surfaces 104a, 104b have a lateral dimension (e.g. in the plane of the sealing surface 104a, 104b) of approximately 22 to 24 mm, such that each sealing surface comprises many (e.g. 11 or 12) discrete projections along its lateral dimension.

The volume of each projection 120 (e.g. if a square-based pyramid) may be equal to one third of the area of the base of the projection 120 multiplied by its height. Accordingly, when two opposing square-based pyramidal projections cooperate, there will be at least some space left between the opposing jaws 102a, 102b for the layers 110, 112 of material to occupy and/or that may not be occupied by either of the first and second jaws 102a, 102b or the layers 110, 112 of material being sealed. Accordingly, the volume being occupied by neither of the first or second sealing surfaces 104a, 104b (including the projections 120 and recesses 122 thereof) may comprise the voids or channels 106 described above, which may facilitate the flowing and mixing of molten material and thus the formation of a seal. The sealing surfaces 104a, 104b and the discrete surface features 120, 122 thereon may be aligned such that the peak of each projection 120 may align and/or correspond with a trough provided on the opposing sealing surface 104a, 104b. The troughs of the array of recesses 122 may form a grid-like array extending in two dimensions, such that the peak of a projection 120 on one sealing surface 104a, 104b may be aligned and/or correspond with any point on the grid-like array of troughs of the recesses 122 of the opposing sealing surface 104a, 104b. For example, the peaks and projections 120 provided on opposing sealing surfaces 104a, 104b may be aligned in a first dimension. Alternatively, corresponding peaks of opposing sealing surfaces 104a, 104b may be misaligned or offset, e.g. in the first dimension. The tapered surfaces of the projections 120 and recesses 122 may allow a degree of self-alignment to occur as the first and second jaws 102a, 102b approach the second position. A reasonable degree of tolerance in the alignment and/or offset of the opposing jaws of the present invention may thereby be permitted.

In use, the sealing surfaces 104a, 104b may be heated by means of the heater provided within the respective jaws 102a, 102b. The sealing surfaces 104a, 104b are heated to a temperature between 130 and 140 degrees Celsius, preferably 135 degrees C.

At least two layers 110, 112 of a packaging material may be provided between the jaws 100 when in the first position shown in Figures 1 and 2. The first and second layers 110, 112 may comprise the same material, or alternatively the first and second layers 110, 112 may comprise different materials. At least one of the first layer 110 and the second layer 112 may comprise or consist of a recyclable polymer, such as polyethylene or polypropylene. In particular, the first layer 110 and the second layer 112 may comprise biaxially oriented polyethylene (BOPE) and/or linear low density polyethylene (LLDPE).

In a preferred example, the first layer and the second layer 110, 112 each comprise a BOPE sublayer and a LLDPE sublayer, the sublayers being laminated together to form a polyethylene layer 110, 112. According to the preferred example, a thickness of the BOPE sublayer is approximately 25 microns, and a thickness of the LLDPE sublayer is between approximately 70 and 80 microns, such that a total thickness of each laminated layer 110, 112 is between 95 and 105 microns.

At least one of the jaws 100 may then be actuated (e.g. actuated linearly) inwardly (e.g. in the direction 150) so that the jaws move towards one another and the separation therebetween may be reduced. As the first jaw 102a and the second jaw 102b near one another, the layers of material provided therebetween may be moved towards one another. For example, the layers 110, 112 of material may contact a respective sealing surface 104a, 104b (e.g. projections 120 thereof). Heat (e.g. a small quantity of heat) from the heated sealing surface 104a, 104b may thereby be dissipated or transferred into the material.

As the jaws 100 near the second position, the projections 120 begin to enter the recesses 122 provided on the opposing jaw 102a, 102b, such that the peaks of adjacent projections 120a, 120b provided on opposing sealing surfaces 104a, 104b begin to laterally overlap. The layers 110, 112 of material provided therebetween may begin to be deformed about the projections 120a, 120b of the opposing sealing surfaces 104a, 104b. For example, the layers 110, 112 of material may be locally melted where the layers 110, 112 contact the projections 120 of the sealing surfaces 104a, 104b, such that the layers 110, 112 of material may be gripped by the projections 120a, 120b.

As the jaws 100 reach the second position, the layers of material provided between the first and second jaws 102a, 102b may be clamped (e.g. pressed) between cooperating surfaces of the tapered sides of the projections 120 and the recesses 122. Accordingly, heat may be dissipated from the tapered sides of the projections 120 and recesses 122 of the sealing surfaces 104a, 104b into the layers of material, such that the material may be melted (e.g. at least partially and/or locally melted) where the material contacts the sealing surfaces 104a, 104b. For example, a distal portion of each projection 120 may be substantially in contact with a respective layer of material 110, 112, such that the distal portion of each projection 120 may dissipate heat into a respective layer of material 110, 112.

Upon reaching the second position, the peaks of the projections 120 may contact or almost contact the troughs of the recesses 122. In the event that the peaks contact the troughs, the layers of material 110, 112 provided between the first and second jaws 102a, 102b may be locally 'punched out' or perforated by the projections 120 at their peaks. This may be achieved by localised heating and subsequent melting, and/or the geometry of the projection 120 and recess 122. The seal formed between the two layers of material 110, 112 may thereby comprise a plurality (e.g. an array) of perforations matching the periodicity of the array 130, 132 of projections 120 of the sealing surfaces 120. Alternatively, material may remain between the peaks and troughs. The clamping forces provided by the first and second jaws 102a, 102b may encourage the locally molten material of the layers 110, 112 to flow from regions of high pressure into the channels provided by the sealing surfaces 104a, 104b. The molten material of each layer 110, 112 may thereby mix and/or fuse together.

The set of jaws 100 may be held in the second position for a period of time, referred to as a 'hold time'. The hold time may ensure that sufficient heat is dissipated into the layers of material 110, 112 for localised melting to occur at certain locations (e.g. towards the distal portions of each projection 120) and/or for sufficient mixing of the molten material to occur. The hold time is between 200 and 600 milliseconds, preferably between 350 and 500 milliseconds.

During the hold time, molten material from each layer 110, 112 may flow along the channels provided between adjacent projections 120 and recesses 122, the molten material 110, 112 thereby conforming and/or deforming to the geometry of the sealing surfaces 104a, 104b. The seal formed between the two layers of material 110, 112 may thereby comprise a series of regions of greater thickness, which may correspond to the channels into which the molten material flows when melted.

Upon completion of the hold time, the cutter may be actuated from within the slot 106, such that the cutter may create a longitudinal cut in the material, thus separating the seal formed by the set of jaws 100 into an upper seal and a lower seal. The first and second jaw 102a, 102b may then be actuated away from one another, such that the layers of material may be released by the sealing surfaces 104a, 104b. The layers of material may then rapidly cool, such that the locally molten material may solidify in the shape/pattern/texture in which it was formed by the cooperating sealing surfaces 104a, 104b.

The layers 110, 112 of material may be subsequently moved away from the set of jaws (e.g. vertically downwards, perpendicular to the longitudinal direction of the set of jaws 100) such that the above process may be repeated on a further portion of material. In an industrial setting where the above process is performed continuously (e.g. on a belt-fed continuous stream of material for food packaging), the upper seal and lower seal may form cross seals on consecutively produced articles of food packaging, the cutter thereby separating consecutively produced articles of food packaging (e.g. freezer bags).

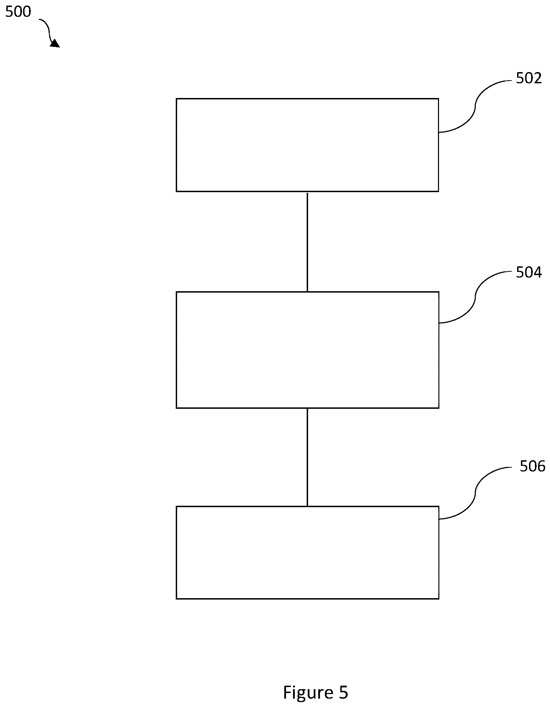

With reference to Figure 5, a method 500 of forming a seal for a food package (such as a bag) is described, the seal being between a first layer 110 of a material and a second layer 112 of a material. For example, a seal may be formed between at least two layers 110, 112 of material.

As mentioned above, the first and second layers 110, 112 may comprise the same material, or alternatively the first and second layers 110, 112 may comprise different materials. At least one of the first layer 110 and the second layer 112 may comprise a polyethylene material, such as biaxially oriented polyethylene (BOPE) and/or linear density polyethylene (LLDPE).

The method 500 comprises, at step 502, providing the first layer 110 and the second layer 112 between the first and second sealing surfaces 104a, 104b. As shown in Figure 2, the first layer and the second layer may be separated from one another, such that they may not be in contact with either of the first and/or second sealing surfaces 104a, 104b prior to actuation (e.g. inward actuation in the direction 150) of the set of jaws 100.

For example, the first layer 110 and the second layer 112 may each be part of one sheet of material which has been folded over on itself along a line which is perpendicular to the longitudinal direction of the jaws 100 and thus the seal being formed. However, the first and second layers 110, 112 may be considered locally (e.g. at the scale of the jaws 100 and the seal being formed) to be separate layers.

At step 504, the method 500 comprises clamping the first layer 110 and the second layer 112 together between the first and second sealing surfaces 104a, 104b. As described above, the method 500 may comprise clamping the first and second layers 110, 112 between corresponding projections 120 and recesses 122 of the first and second sealing surfaces 104a, 104b.

Clamping, at step 504, the first and second layers 110, 112 together between the first and second sealing surfaces 104a, 104b may comprise actuating the first and second jaws 102a, 102b towards one another (e.g. from the first position, shown in Figures 1 and 2, to the second position). Step 504 may comprise holding the first and second jaws 102a, 102b, and thus the first and second sealing surfaces 104a, 104b together for a hold time. In one example, the hold time is between 200 and 600 milliseconds, and in a preferred example, the hold time is between 350 and 500 milliseconds. In a most preferred example, the hold time is approximately 350 milliseconds. At step 504, the method may comprise applying a force so as to bias the first and second sealing surfaces 104a, 104b together for the duration of the hold time.

At step 506, the method 500 comprises applying heat to the first and second layers 110, 112 so as to seal the first and second layers 110, 112 together. For example, heat may be applied to the first and second layers 110, 112 by means of clamping together the heated (e.g. pre-heated) sealing surfaces 104a, 104b. Heat may be applied to the sealing surfaces 104a, 104b concurrently with steps 502, 504. Step 506 may comprise heating the sealing surfaces 104a, 104b of the jaws 100 to a desired sealing temperature, which may be in excess of the melting point of the materials being sealed. In one example, the desired sealing temperature is between 130 and 140 degrees C. In a most preferred example, the sealing temperature is approximately equal to 135 degrees C.

The method 500 may additionally comprise separating the first and second jaws 102a, 102b so as to release the layers 110, 112 of material therefrom. The method 500 may comprise moving the sealed material away from the jaws. The method 500 may then be repeated, for example, on two new layers 110, 112 of material.

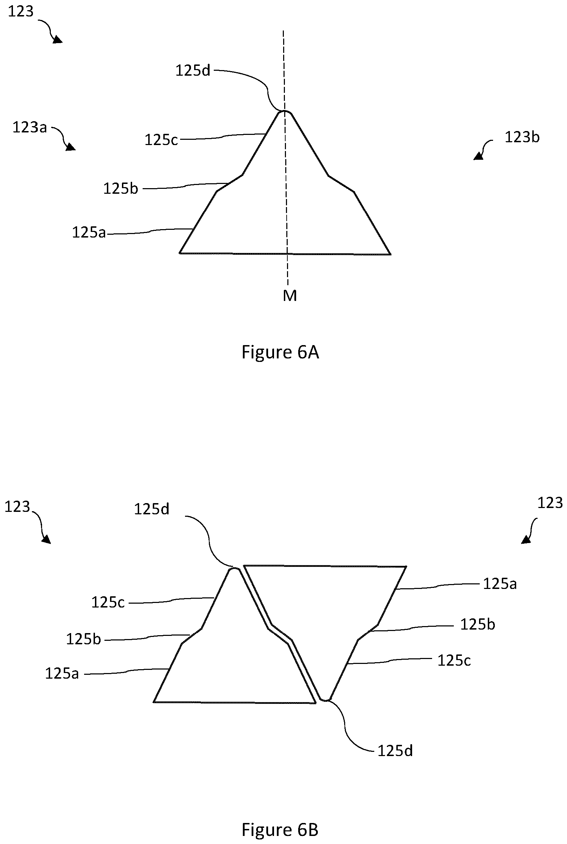

With reference to Figure 6A, a stepped projection 123 is described. The stepped projection 123 is an embodiment of the projection 122 having a square-based pyramidal geometry.

Figure 6A shows a section along a midline (e.g. a plane including the line III-III in Figure 4A or Figure 4B) of the stepped projection 123. Accordingly, a section through a first face 123a and a second face 123b of the pyramidal projection 123 are shown in Figure 6A, the first and second faces 123a, 123b being symmetric about a further mid-plane M bisecting the base of the projection 123 and the tip 125d.

As shown in Figure 6A, the stepped projection 123 may comprise a rounded tip 125d, such that the peak of the projection 123 may be smoothed or blunted so as to reduce (e.g. prevent) penetration of the first and second layers whilst the sealing jaws 102 approach one another. However, the rounded tip 123d may still be capable of penetrating (e.g. punching through or punching-out) the first and second layers 110, 112 when the sealing jaws 102 are in the second position. The radius of curvature of the tip 123d may be approximately equal to one twentieth of the width dimension of the base of the projection 123.

One or more of the faces may comprise two or more non-parallel planar portions. For example, the first face 123a comprises three substantially planar portions, 125a, 125b, 125c. At an end of the face 123a nearest to the base of the stepped projection 123 is provided the lower portion 125a. At an end of the face 123a nearest to the tip 125d is provided the upper portion 125c. The lower portion 125a and the upper portion 125c comprise a substantially equal gradient, such that the planes of the lower and upper portions 125a, 125c are substantially parallel.

Between the lower and upper portions 125a, 125c, part way up the face 123a of the stepped projection 123, is provided the stepped portion 125b which joins the lower portion 125a to the upper portion 125c. The stepped portion 125b comprises a gradient which is lower in magnitude than the lower and upper portions 125a, 125c. The stepped portion 125b thereby provides a step or discontinuity in the gradient of the face 123a. The stepped portion 125b forms an edge with each of the lower portion 125a and the upper portion 125b, each edge being into/out of the plane of the section of Figure 6A.

It will be appreciated that the above description will equally apply to the second face 123b. Additionally, it will be appreciated by the skilled person that the square-based pyramidal stepped projection 123 shown in Figure 6A comprises two additional faces (not shown) substantially parallel with the plane of the page. These two additional faces may comprise features and geometry identical to the first and second faces 123a,b. For example, each of the two additional faces (not shown) may also comprise the stepped profile described above. The stepped projection 123 may thereby comprise an identical cross section along the perpendicular midplane M.

Accordingly, each of the four faces, including the first and second faces 123a, 123b, of the stepped projection 123 may comprise a stepped portion 125b having a gradient which is lower in magnitude than the gradient of the remainder (e.g. majority) of the respective face. Each stepped projection 123 may thereby comprise a four-sided step. Alternatively, only two faces (e.g. two opposing faces) of the stepped projection 123 may comprise the stepped portion 125b; the remaining two faces of a square-based pyramidal stepped projection 123 may comprise a continuous (e.g. substantially triangular, planar) surface running from base to tip 125d and not having a stepped portion 125b.

The stepped portion 125b may comprise a minority of the surface area of each face of the stepped projection 123. For example, the stepped portion 125b may comprise approximately one fifth of the slant height of each face of a square-based pyramidal stepped projection 123. The stepped portion 125b may be provided halfway up the slant height of the face. The slant height of the lower portion 125a may be substantially equal to the slant height of the upper portion 125c.

Figure 6B shows a section through the midplanes of two opposing stepped projections 123 when the sealing jaws 102 are in the second position. As shown in Figure 6B, the stepped portion 125b may be configured to cooperate with a corresponding stepped portion 125b provided on an opposing stepped projection 123 provided on an opposing sealing jaw 102. The cooperating stepped portions 125b may thereby cooperate to clamp therebetween the first and second layers 110, 112 (not shown in Figure 6B), such that the first and second layers 110, 112 may thereby be sealed together. In particular, the stepped portions 125b may transfer heat from the sealing jaws 102 to the first and second layers 110, 112 so as to locally melt the first and second layers 110, 112 and thereby form a seal therebetween.

It will be noted by the skilled person that, in the second position shown in Figure 6B, the separation between the two stepped projections 123 provided on opposing sealing jaws 102a, 102b is substantially equal along the whole slant height (e.g. from base to tip) of the cooperating faces.

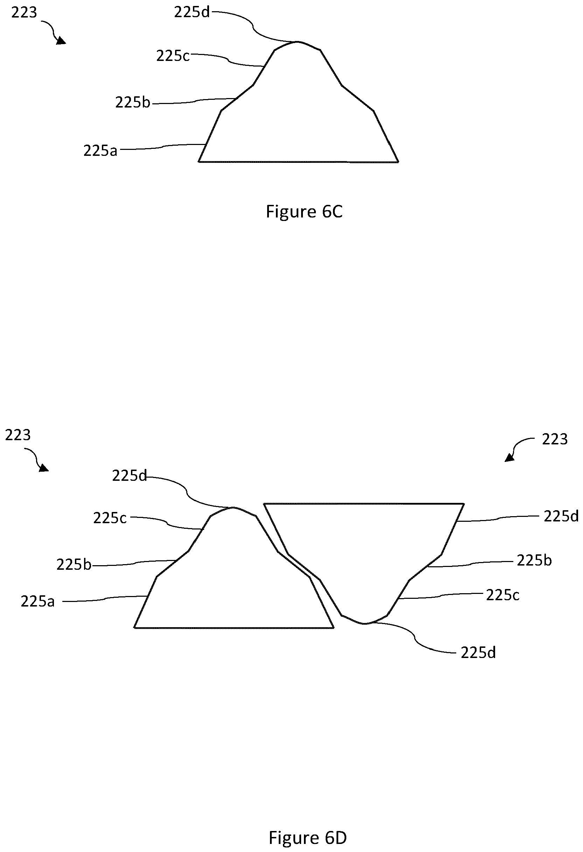

With reference to Figure 6C, a further embodiment of a stepped projection 223 is described. The stepped projection 223 is similar to the stepped projection 123 in that both stepped projections 123, 223 comprise a stepped portion 125b, 225b provided between, and having a gradient lower in magnitude than, a lower portion 125a, 225a and an upper portion 125c, 225b. Additionally, the stepped projections 123, 223 both comprise a rounded tip 125d, 225d.

The stepped projection 223 differs from the stepped projection 123 in that the upper portion 225c comprises a gradient which is greater in magnitude than the stepped portion 125b but lower in magnitude than the lower portion 225a. Accordingly, the stepped projection 223 comprises a lower portion 225a, a stepped portion 225b and an upper portion 225c having gradients of different magnitudes. The magnitude of the upper portion 225c may be substantially similar to, but lower than, the magnitude of the lower portion 225a. For example, the magnitude of the gradient of the upper portion 225c may be closer in magnitude to that of the lower portion 225a than that of the stepped portion 225b.

Additionally, the rounded tip 225d of the projection 223 comprises a larger radius of curvature than that of the rounded tip 125d. For example, the radius of curvature of the tip 225d may be approximately equal to one eighth of the width of the base of the projection 223.

Figure 6D shows a section through the midplanes of two opposing stepped projections 223 when the sealing jaws 102 are in the second position. As shown in Figure 6D, the stepped portion 225b may be configured to cooperate with a corresponding stepped portion 225b provided on an opposing stepped projection 223 provided on an opposing sealing jaw 102. As will be appreciated by the skilled person, the separation between the two opposing stepped projections 223 shown in Figure 6D varies with slant height as a result of the different gradients of the upper and lower portions 225a, 225c. In particular, the separation between the corresponding steps 225b is smaller than the separation between the opposing upper and lower portions 225a, 225c. Indeed, the separation between opposing upper and lower portions 225a, 225c may decrease towards the opposing steps 225b.

The gradient of the stepped portions 125b, 225b, and/or the alignment of the opposing sealing jaws 102, may be selected such that the separation between opposing stepped portions 125b, 225b may be substantially equal to (e.g. slightly narrower than) a total thickness dimension of the first and second layers 110, 112.

Whilst the stepped portions 125b, 225b of the projections 123, 223 have been illustrated as having non-zero gradients, it should be understood that the stepped portions 125b, 225b may have a gradient being substantially equal to (e.g. equal to) zero, such that the stepped portions 125b, 225b may be parallel with the base of the projections 123, 223.

Further, whilst the stepped projections 123, 223 have been described in relation to square-based pyramidal geometries, it should be understood that the stepped portions 125b, 225b may equally be applicable to tapered projections having different geometries, e.g. triangular based pyramidal projections, wherein each of the three faces may comprise a stepped portion.

The stepped portions 125b, 225b of Figure 6 may decrease the area of the sealing jaws 102 which is in contact with the first and second layers 110, 112 when the jaws are in the second position. The stepped portions 125b, 225b may thereby locally increase the pressure exerted on the first and second layers 110, 112 at the locations where sealing features between the first and second layers 110, 112 are formed.

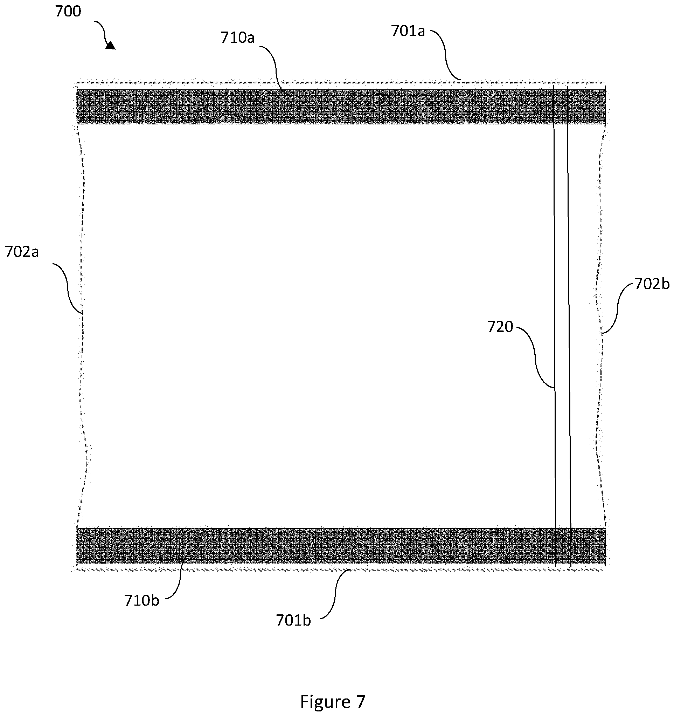

With reference to Figure 7, a food packaging article 700 formed by the above-described method may comprise one or more edges 701a, 701b, 702a, 702b. A seal 710a, 710b, such as that formed by the jaws 102a, 102b, may be provided at or alongside one or more of the edges. For example, the seal 710a, 710b may have a knurled profile by virtue of the knurled jaws 102a, 102b. As depicted, seals 710a, 710b formed by the jaws 102a, 102b may be provided along opposing edges 701a, 701b. Multiple food packaging articles 700 may be formed in a continual process. For example, the seal 710a from a first food packaging article 700 may be formed concurrently with the seal 710b of an adjacent food packaging article by the first and second sealing surface 104a, 104b of the jaws 102a, 102b. The seals 710a, 710b of the adjacent packaging articles (and thus the packaging articles) may be separated by the cutter, e.g. in the longitudinal slot 106 as mentioned above.

The other edges 702a, 702b of the food packaging article 700 may be sealed with similar jaws 102a, 102b and sealing surfaces 104a, 104b, e.g. such that knurled seals are provided at or alongside edges 702a, 702b. Alternatively, one or more of the edges 701a, 701b, 702a, 702b may comprise a seal formed by a different sealing arrangement, e.g. by virtue of a flat plate or ridged jaw arrangement. One of the edges may be formed by folding a sheet of material so as to form the layers 110, 112.

In the example shown in Figure 7, the food packaging article comprises an optional re-sealable strip 720. The re-sealable strip may be provided adjacent to and alongside one of the edges, such as edge 702b. The re-sealable strip 720 may be configured such that a customer may cut or tear open the food packaging article 700, e.g. at edge 702b, and then re-seal the article by virtue of the re-sealable strip 720. The re-sealable strip 720 may comprise a pair of strip portions with cooperating sections that cooperate with one another so as to selectively form a seal between the two strip portions. Each strip portion may otherwise be joined to one of the layers 110, 112.

The re-sealable strip 720 may intersect with one or both of the seals 710a, 710b formed by the jaws 102a, 102b. Where the re-sealable strip intersects one of the seals 710a, 710b, the sealing process has to seal four layers of material: the two layers 110, 112 and the pair of strip portions making up the resealable strip 720. Increasing the time and/or temperature of the sealing process to allow the four layers to satisfactorily seal was found to cause problems elsewhere along the seal 710a or 710b where only two layers of material are present. For example, the additional time or temperature required for the four-layer region, resulted in deformed and unreliable seals where only two layers of material are present due to the excessive time or temperature. However, the jaws 102a, 102b of the present disclosure advantageously provide additional pressure (without necessarily requiring additional temperature or time) that allows a satisfactory seal to form both where the re-sealable strip is present and not present.

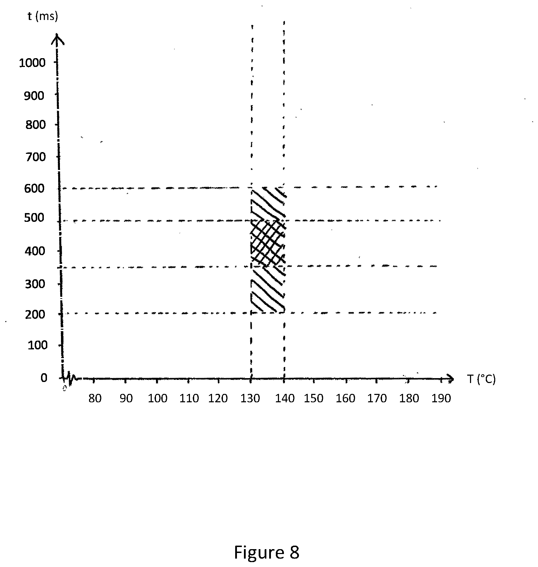

Figure 8 is a quality matrix showing the quality of a seal achieved using the foregoing method and/or sealing jaws for a range of hold times and jaw sealing temperatures. The x-axis shows the jaw temperature (in degrees Celsius), and the y-axis shows the hold time (in milliseconds) of the sealing jaws in the second position.

In the matrix, the hatched areas show a time and temperature regime in which an acceptable seal quality is achieved. The cross-hatched area shows a time and temperature regime in which a high quality seal is achieved. The non-hatched (unshaded) areas show time and temperature regimes in which an unacceptable (e.g. defective) or low seal quality is achieved.

Accordingly, for jaw temperatures between 130 and 140 °C and hold times between 200 and 600 ms, a seal of at least acceptable quality is achievable. Further, for jaw temperatures between 130 and 140 °C and hold times between 350 and 500 ms, a seal of high quality is achievable.

The present inventors have determined that existing sealing methods (e.g. using sealing jaws having a series of parallel bars on each jaw) for sealing conventional packaging materials (e.g. PE/PET laminate 82 micron) use jaw temperatures which are approximately 10 degrees hotter than the melting point of the material being sealed. In the example of PE/PET laminate 82 micron, this may be referred to as an homologous temperature of between 1.03 and 1.05 Tₘₚ. The present inventors have determined that, rather than using a jaw temperature of the same homologous temperature in relation to a recyclable material having a different melting point, and rather than using a jaw temperature which is also approximately 10 degrees warmer than the melting point of the recyclable material, it is surprisingly desirable to use jaws at essentially the same temperature as for non-recyclable materials (with different melting temperatures) but whilst using sealing jaws having different characteristics and features.

### Advantages

The present inventors have determined that previously proposed sealing methods for packaging materials may comprise the formation of a seal which runs continuously along an edge of an article of packaging, the seal running perpendicular to the direction in which the movement of substances (e.g. air, water etc.) is to be prevented. For example, such a method may comprise using a set of jaws having a series of parallel ridges and grooves that run perpendicular to the direction in which the movement of substances is to be prevented. However, the use of an array 130, 132 of projections which are discrete (e.g. discontinuous in two dimensions) means that a seal formed according to the present disclosure may not comprise a continuous seal running perpendicular to the direction in which travel of substances is to be prevented. In particular, a seal formed according to the present disclosure may comprise a tortuous, zig-zagging path along the channels of the seal which may be formed between adjacent projections 120.

For example, it may be that one row or column of surface features 120, 122 according to the present invention may be insufficient for forming a seal in a material, as each surface feature 120, 122 may be disconnected from its neighbours along two directions or dimensions. A substance-tight seal may thereby require multiple rows or columns of surface features 120, 122 which collectively form a substance-tight seal.

This aspect of the present invention, in which a two dimensional array of discrete surface features 120, 122 may collectively form a seal, may be an advantage of the invention when food debris becomes trapped in the region of the material in which a seal is to be formed. For example, the inclusion of food debris may make imperfect seals around a small number of adjacent surface features 120, 122, however as the formation of a seal is a collective effect from a vast array of surface features, the collective seal formed by the vast plurality of surface features 120, 122 is not detrimentally affected.

In addition, the jaw arrangement of the present disclosure was found to advantageously increase the sealing pressure so that the recyclable polymer layers can be reliably sealed together without requiring additional sealing time or temperature. Further, the present inventors have determined that the increased rate of heat dissipation achieved by the present invention may even allow a greater throughput of the set of sealing jaws 100. For example, the greater rate of heat dissipation may permit a reduced hold time, such that an output in excess of 35 seals (e.g. 35 bags) per minute may be achieved. For example, an output in excess of 35 seals (e.g. 35 bags) per minute (e.g. an output of between 55 and 60 seals per minute) is readily achievable, as is an output of up to 110 seals per minute. The present invention may be the only means by which such a throughput in such materials may be achieved.

Further still, according to the present invention, an effective jaw temperature can be maintained for prolonged durations of continuous production, without the requirement for cooling stoppages and/or cleaning (e.g. de-gumming up) of the apparatus.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A method of forming a food package seal, the seal being between a first polyethylene layer (110) and a second polyethylene layer (112), the method comprising:
providing the first polyethylene layer and the second polyethylene layer between first and second sealing surfaces (104a, 104b);
clamping the first polyethylene layer and the second polyethylene layer together with the first and second sealing surfaces, the first sealing surface comprising an array of discrete projections (120) and the second sealing surface comprising an array of recesses (122), the projections of the first sealing surface cooperating with the recesses of the second sealing surface; and
applying heat to the first polyethylene layer and the second polyethylene layer to seal the first and second polyethylene layers together, wherein applying heat to the first polyethylene layer and the second polyethylene layer comprises heating the first and second sealing surfaces to a temperature between 130 and 140 °C,
wherein the method comprises clamping the first layer and the second layer together for a duration between 200 and 600 milliseconds.

2. The method of claim 1, wherein the first and second sealing surfaces (104a, 104b) each comprise an array of recesses (122) and an array of discrete projections (120), the recesses of each of the first and second sealing surfaces being configured to cooperate with the projections provided on the opposing sealing surface.

3. The method of claim 1 or 2, wherein the recesses (120) are provided between adjacent projections (122) of the array of discrete projections.

4. The method of any preceding claim, wherein each of the projections (122) comprises a tapered geometry, e.g. a pyramidal geometry, such that a width of each projection decreases with height.

5. The method of any preceding claim, wherein applying heat to the first polyethylene layer (110) and the second polyethylene layer (112) comprises applying heat to a portion of the first polyethylene layer and a portion of the second polyethylene layer clamped between the first and second sealing surfaces (104a, 104b).

6. The method of any preceding claim, wherein applying heat to the first polyethylene layer (110) and the second polyethylene layer (112) comprises heating the first and second sealing surfaces (104a, 104b) to a temperature of 135 °C.

7. The method of any preceding claim, wherein at least one of the first and second polyethylene layers (110, 112) comprises a first sublayer and a second sublayer, e.g. the first sublayer comprises biaxially oriented polyethylene, and the second sublayer comprises linear low density polyethylene.

8. The method of any preceding claim, wherein the projections (122) of the first sealing surface (104a) cooperate with the recesses (112) of the second sealing surface (104b) such that voids remain between the first and second sealing surfaces when they have come together.

9. The method of any preceding claim, wherein the array of discrete projections (120) comprises a plurality of discrete projections arranged in a repeating pattern having two-dimensional periodicity, optionally wherein the two-dimensional periodicity is exhibited along axes that are perpendicular to one another or axes that are not perpendicular to one another, e.g. at 45 degrees to one another.

10. The method of any preceding claim, wherein each projection comprises a stepped portion (125), e.g. at least one face of each projection comprises a stepped portion, the stepped portion being configured to cooperate with a stepped portion provided on an opposing projection so as to clamp therebetween the first and second layers (110, 112).

11. The method of any preceding claim, wherein the method comprises clamping the first layer (110) and the second layer (112) together for a duration between 350 and 500 milliseconds.

12. The method of any preceding claim, wherein the array of discrete projections (122) comprises a periodicity of approximately 2 mm, e.g. such that each projection is approximately 2 mm wide.

13. The method of any preceding claim, wherein the method comprises providing at least a portion of a re-sealable strip (720) between the first and second polyethylene layers (110, 112) and between the first and second sealing surfaces (104a, 104b).

14. A food package sealing assembly (100) configured to seal a first polyethylene layer (110) and a second polyethylene layer (112) together, the food package sealing assembly comprising:
a first sealing surface (104a) and a second sealing surface (104b) movable with respect to one another; and
at least one heater for heating the first and second sealing surfaces, wherein the at least one heater is configured to heat the first and second sealing surfaces to a temperature between 130 and 140 °C,
wherein the first sealing surface comprises an array of discrete projections (122) and the second sealing surface comprising an array of recesses (120), the projections of the first sealing surface cooperating with the recesses of the second sealing surface so that when the first and second sealing surfaces come together, the first and second polyethylene layers are sealed together, wherein the first and second sealing surfaces are configured to clamp therebetween the first polyethylene layer and the second polyethylene layer for a duration between 200 and 600 milliseconds.

## Patentansprüche

1. Verfahren zum Herstellen einer Lebensmittelverpackungssiegelverbindung, wobei die Siegelverbindung zwischen einer ersten Polyethylenschicht (110) und einer zweiten Polyethylenschicht (112) erfolgt, wobei das Verfahren Folgendes umfassend:
Bereitstellen der ersten Polyethylenschicht und der zweiten Polyethylenschicht zwischen einer ersten und einer zweiten Siegelverbindungsfläche (104a, 104b);
Zusammenklemmen der ersten Polyethylenschicht und der zweiten Polyethylenschicht mit der ersten und der zweiten Siegelverbindungsfläche, wobei die erste Siegelverbindungsfläche eine Anordnung von diskreten Vorsprüngen (120) umfasst und die zweite Siegelverbindungsfläche eine Anordnung von Vertiefungen (122) umfasst, wobei die Vorsprünge der ersten Siegelverbindungsfläche mit den Vertiefungen der zweiten Siegelverbindungsfläche zusammenwirken; und
Aufbringen von Wärme auf die erste Polyethylenschicht und die zweite Polyethylenschicht, um die erste und die zweite Polyethylenschicht miteinander zu versiegeln, wobei das Aufbringen von Wärme auf die erste Polyethylenschicht und die zweite Polyethylenschicht Erwärmen der ersten und der zweiten Siegelverbindungsfläche auf eine Temperatur zwischen 130 und 140 °C umfasst,
wobei das Verfahren das Zusammenklemmen der ersten Schicht und der zweiten Schicht für eine Dauer zwischen 200 und 600 Millisekunden umfasst.

2. Verfahren nach Anspruch 1, wobei die erste und die zweite Siegelverbindungsfläche (104a, 104b) jeweils eine Anordnung von Vertiefungen (122) und eine Anordnung von diskreten Vorsprüngen (120) umfassen, wobei die Vertiefungen der ersten und der zweiten Siegelverbindungsfläche dazu konfiguriert sind, mit den Vorsprüngen zusammenwirken, die auf der gegenüberliegenden Siegelverbindungsfläche bereitgestellt sind.

3. Verfahren nach Anspruch 1 oder 2, wobei die Vertiefungen (120) zwischen benachbarten Vorsprüngen (122) der Anordnung von diskreten Vorsprüngen bereitgestellt sind.

4. Verfahren nach einem der vorhergehenden Ansprüche, wobei jeder der Vorsprünge (122) eine sich verjüngende Geometrie, z. B. eine pyramidenförmige Geometrie, umfasst, sodass die Breite jedes Vorsprungs mit der Höhe abnimmt.

5. Verfahren nach einem der vorhergehenden Ansprüche, wobei das Aufbringen von Wärme auf die erste Polyethylenschicht (110) und die zweite Polyethylenschicht (112) das Aufbringen von Wärme auf einen Abschnitt der ersten Polyethylenschicht und einen Abschnitt der zweiten Polyethylenschicht umfasst, die zwischen der ersten und der zweiten Siegelverbindungsfläche (104a, 104b) eingeklemmt sind.

6. Verfahren nach einem der vorhergehenden Ansprüche, wobei das Aufbringen von Wärme auf die erste Polyethylenschicht (110) und die zweite Polyethylenschicht (112) das Erwärmen der ersten und der zweiten Siegelverbindungsflächen (104a, 104b) auf eine Temperatur von 135 °C umfasst.

7. Verfahren nach einem der vorhergehenden Ansprüche, wobei mindestens eine der ersten und der zweiten Polyethylenschichten (110, 112) eine erste Teilschicht und eine zweite Teilschicht umfasst, z. B. die erste Teilschicht biaxial orientiertes Polyethylen umfasst und die zweite Teilschicht lineares Polyethylen niedriger Dichte umfasst.

8. Verfahren nach einem der vorhergehenden Ansprüche, wobei die Vorsprünge (122) der ersten Siegelverbindungsfläche (104a) mit den Vertiefungen (112) der zweiten Siegelverbindungsfläche (104b) so zusammenwirken, dass zwischen der ersten und der zweiten Siegelverbindungsfläche Hohlräume verbleiben, wenn sie zusammengekommen sind.

9. Verfahren nach einem der vorhergehenden Ansprüche, wobei die Anordnung von diskreten Vorsprüngen (120) eine Vielzahl von diskreten Vorsprüngen umfasst, die in einem sich wiederholenden Muster, das eine zweidimensionale Periodizität aufweist,
angeordnet sind, wobei die zweidimensionale Periodizität optional entlang von Achsen, die senkrecht zueinander stehen, oder Achsen, die nicht senkrecht zueinander stehen, z. B. in einem Winkel von 45 Grad zueinander, ausgebildet ist.

10. Verfahren nach einem der vorhergehenden Ansprüche, wobei jeder Vorsprung einen abgestuften Abschnitt (125) umfasst, z. B. mindestens eine Fläche jedes Vorsprungs einen abgestuften Abschnitt umfasst, wobei der abgestufte Abschnitt dazu konfiguriert ist, mit einem abgestuften Abschnitt zusammenzuwirken, der an einem gegenüberliegenden Vorsprung bereitgestellt ist, um die erste und zweite Schicht (110, 112) dazwischen zu klemmen.

11. Verfahren nach einem der vorhergehenden Ansprüche, wobei das Verfahren das Zusammenklemmen der ersten Schicht (110) und der zweiten Schicht (112) für eine Dauer zwischen 350 und 500 Millisekunden umfasst.

12. Verfahren nach einem der vorhergehenden Ansprüche, wobei die Anordnung von diskreten Vorsprüngen (122) eine Periodizität von etwa 2 mm umfasst, z. B. sodass jeder Vorsprung etwa 2 mm breit ist.

13. Verfahren nach einem der vorhergehenden Ansprüche, wobei das Verfahren das Bereitstellen mindestens eines Abschnitts eines wiederverschließbaren Streifens (720) zwischen der ersten und der zweiten Polyethylenschicht (110, 112) und zwischen der ersten und der zweiten Siegelverbindungsfläche (104a, 104b) umfasst.

14. Lebensmittelverpackungssiegelverbindungsbaugruppe (100), die dazu konfiguriert ist, eine erste Polyethylenschicht (110) und eine zweite Polyethylenschicht (112) miteinander zu versiegeln, wobei die Lebensmittelverpackungssiegelverbindungsbaugruppe Folgendes umfasst:
eine erste Siegelverbindungsfläche (104a) und eine zweite Siegelverbindungsfläche (104b), die in Bezug zueinander beweglich sind, und
mindestens ein Heizelement zum Erwärmen der ersten und der zweiten
SiegelverbindungsflächeSiegelverbindungsflächeSiegelverbindung sflächeSiegelverbindungsfläche, wobei das mindestens eine Heizelement dazu konfiguriert ist, die erste und die zweite Siegelverbindungsfläche auf eine Temperatur zwischen 130 und 140 °C zu erwärmen,
wobei die erste Siegelverbindungsfläche eine Anordnung von diskreten Vorsprüngen (122) umfasst und die zweite Siegelverbindungsfläche eine Anordnung von Vertiefungen (120) umfasst, die Vorsprünge der ersten Siegelverbindungsfläche mit den Vertiefungen der zweiten Siegelverbindungsfläche zusammenwirken, sodass, wenn die erste und die zweite Siegelverbindungsfläche zusammenkommen, die erste und die zweite Polyethylenschicht miteinander versiegelt werden, wobei die erste und die zweite Siegelverbindungsfläche dazu konfiguriert sind, zwischen der ersten Polyethylenschicht und der zweiten Polyethylenschicht für eine Dauer zwischen 200 und 600 Millisekunden klemmen.

## Revendications

1. Procédé de formation d'un joint scellé d'emballage alimentaire, le joint scellé étant entre une première couche de polyéthylène (110) et une seconde couche de polyéthylène (112), le procédé consistant à :
prévoir la première couche de polyéthylène et la seconde couche de polyéthylène entre les première et seconde surfaces de scellage (104a, 104b) ;
serrer la première couche de polyéthylène et la seconde couche de polyéthylène avec les première et seconde surfaces de scellage, la première surface de scellage comprenant un réseau de saillies discrètes (120) et la seconde surface de scellage comprenant un réseau d'évidements (122), les saillies de la première surface de scellage coopérant avec les évidements de la seconde surface de scellage ; et
appliquer de la chaleur à la première couche de polyéthylène et à la seconde couche de polyéthylène pour sceller les première et seconde couches de polyéthylène ensemble, l'application de chaleur à la première couche de polyéthylène et à la seconde couche de polyéthylène comprenant le chauffage des première et seconde surfaces de scellage à une température comprise entre 130 et 140 °C,
le procédé comprenant le serrage de la première couche et de la seconde couche ensemble pendant une durée comprise entre 200 et 600 millisecondes.

2. Procédé selon la revendication 1, dans lequel les première et seconde surfaces de scellage (104a, 104b) comprennent chacune un réseau d'évidements (122) et un réseau de saillies discrètes (120), les évidements de chacune des première et seconde surfaces de scellage étant configurés pour coopérer avec les saillies prévues sur la surface de scellage opposée.

3. Procédé selon la revendication 1 ou 2, dans lequel les évidements (120) sont prévus entre des saillies (122) adjacentes du réseau de saillies discrètes.

4. Procédé selon une quelconque revendication précédente, dans lequel chacune des saillies (122) comprend une géométrie conique, par exemple une géométrie pyramidale, de telle sorte qu'une largeur de chaque saillie diminue avec la hauteur.

5. Procédé selon une quelconque revendication précédente, dans lequel l'application de chaleur à la première couche de polyéthylène (110) et à la seconde couche de polyéthylène (112) comprend l'application de chaleur à une partie de la première couche de polyéthylène et à une partie de la seconde couche de polyéthylène serrée entre les première et seconde surfaces de scellage (104a, 104b).

6. Procédé selon une quelconque revendication précédente, dans lequel l'application de chaleur à la première couche de polyéthylène (110) et à la seconde couche de polyéthylène (112) comprend le chauffage des première et seconde surfaces de scellage (104a, 104b) à une température de 135 °C.

7. Procédé selon une quelconque revendication précédente, dans lequel au moins l'une des première et seconde couches de polyéthylène (110, 112) comprend une première sous-couche et une seconde sous-couche, par exemple la première sous-couche comprend du polyéthylène orienté biaxialement et la seconde sous-couche comprend du polyéthylène linéaire basse densité.

8. Procédé selon une quelconque revendication précédente, dans lequel les saillies (122) de la première surface de scellage (104a) coopèrent avec les évidements (112) de la seconde surface de scellage (104b) de telle sorte que des vides restent entre les première et seconde surfaces de scellage lorsqu'elles se sont assemblées.

9. Procédé selon une quelconque revendication précédente, dans lequel le réseau de saillies discrètes (120) comprend une pluralité de saillies discrètes agencées selon un motif répétitif ayant une périodicité bidimensionnelle, éventuellement dans lequel la périodicité bidimensionnelle apparaît le long d'axes qui sont perpendiculaires les uns aux autres ou d'axes qui ne sont pas perpendiculaires les uns aux autres, par exemple à 45 degrés les uns par rapport aux autres.

10. Procédé selon une quelconque revendication précédente, dans lequel chaque saillie comprend une partie étagée (125), par exemple au moins une face de chaque saillie comprend une partie étagée, la partie étagée étant configurée pour coopérer avec une partie étagée prévue sur une saillie opposée de manière à serrer entre elles les première et seconde couches (110, 112).

11. Procédé selon une quelconque revendication précédente, le procédé comprenant le serrage de la première couche (110) et de la seconde couche (112) ensemble pendant une durée comprise entre 350 et 500 millisecondes.

12. Procédé selon une quelconque revendication précédente, dans lequel le réseau de saillies discrètes (122) comprend une périodicité d'environ 2 mm, par exemple de telle sorte que chaque saillie ait une largeur d'environ 2 mm.

13. Procédé selon une quelconque revendication précédente, le procédé comprenant la fourniture d'au moins une partie d'une bande rescellable (720) entre les première et seconde couches de polyéthylène (110, 112) et entre les première et seconde surfaces de scellage (104a, 104b).

14. Ensemble de scellage d'emballage alimentaire (100) configuré pour sceller ensemble une première couche de polyéthylène (110) et une seconde couche de polyéthylène (112), l'ensemble de scellage d'emballage alimentaire comprenant :
une première surface de scellage (104a) et une seconde surface de scellage (104b) mobiles l'une par rapport à l'autre ; et
au moins un élément chauffant pour chauffer les première et seconde surfaces de scellage, l'au moins un élément chauffant étant configuré pour chauffer les première et seconde surfaces de scellage à une température comprise entre 130 et 140 °C,
dans lequel la première surface de scellage comprend un réseau de saillies discrètes (122) et la seconde surface de scellage comprend un réseau d'évidements (120), les saillies de la première surface de scellage coopérant avec les évidements de la seconde surface de scellage de sorte que lorsque les première et seconde surfaces de scellage s'assemblent, les première et seconde couches de polyéthylène sont scellées ensemble, les première et seconde surfaces de scellage étant configurées pour serrer entre elles la première couche de polyéthylène et la seconde couche de polyéthylène pendant une durée comprise entre 200 et 600 millisecondes.
